(19) Europäisches Patentamt
European Patent Office
Office européen des brevets

(11) **EP 1 952 879 A1**

(12) **EUROPEAN PATENT APPLICATION**
published in accordance with Art. 158(3) EPC

(43) Date of publication:
**06.08.2008 Bulletin 2008/32**

(21) Application number: **05795702.9**

(22) Date of filing: **24.10.2005**

(51) Int Cl.:
***B01D 65/02*** (2006.01)     ***B01D 63/00*** (2006.01)

(86) International application number:
**PCT/JP2005/019479**

(87) International publication number:
**WO 2007/049327 (03.05.2007 Gazette 2007/18)**

(84) Designated Contracting States:
**AT BE BG CH CY CZ DE DK EE ES FI FR GB GR HU IE IS IT LI LT LU LV MC NL PL PT RO SE SI SK TR**

(71) Applicant: **Kubota Corporation**
**Osaka-shi,**
**Osaka 556-8601 (JP)**

(72) Inventors:
- **NISHIMORI, Kazuhisa**
  **Hyogo 661-8567 (JP)**
- **UESAKA, Taichi**
  **Hyogo 661-8567 (JP)**
- **UEJIMA, Tatsuya**
  **Hyogo 661-8567 (JP)**

- **GE, Hua Qiang**
  **Chuo-ku, Tokyo 103-0022 (JP)**
- **OKAJIMA, Yasunobu**
  **Chuo-ku, Tokyo 103-022 (JP)**
- **MATSUDA, Tomonori**
  **Chuo-ku, Tokyo 103-0022 (JP)**
- **TANNO, Toshio**
  **Chuo-ku, Toyko 103-0022 (JP)**
- **SAKAMOTO, Youjiro**
  **Hyogo 661-8567 (JP)**

(74) Representative: **Engelhardt, Harald**
**le Vrang & Engelhardt,**
**Fliederstrasse 1**
**85139 Wettstetten (DE)**

(54) **LARGE SCALE MEMBRANE SEPARATING DEVICE**

(57)     A large scale membrane separating installation wherein a cleaning chemical liquid flows to membrane units through a header and branch pipes. A cleaning chemical liquid distribution unit comprises the header and the branch pipes having a diameter smaller than that of the header. The cleaning chemical liquid distribution unit comprises a pipeline configuration uniformly distributing the cleaning chemical liquid supplied to the membrane units.

FIG. 1

EP 1 952 879 A1

## Description

Technical Field

The present invention relates to a large scale membrane separating installation, and to a technique of, when cleaning a membrane unit with a chemical liquid, efficiently uniformly distributing and contacting the chemical liquid to and with the membrane unit.

Background Art

In conventional submerged membrane separating installations located in a reaction vessel, a membrane unit constituting a basic unit has a plurality of membrane cartridges installed in one casing. As known from Japanese Patent Laid-Open No. 9-52026, in small scale facilities using a small number of membrane cartridges, during cleaning with a chemical liquid, the cleaning chemical liquid is supplied to each of the membrane cartridges by gravity injection.

However, in large scale facilities, a plurality of membrane units are arranged in a line or in a plurality of lines depending on the increased volume of the reaction vessel. In this case, when the cleaning chemical liquid is supplied to each membrane cartridge by gravity injection, the time required for the supply operation increases to reduce the operation time of the facility and thus the throughput of the facility.

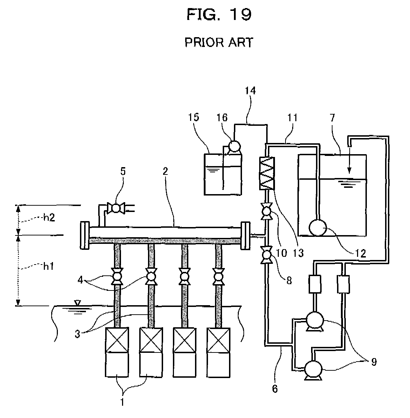

Thus, the inventors have contrived a method of supplying a predetermined amount of cleaning chemical liquid in a short time using a pump as shown in FIG. 19.

In FIG. 19, in the reaction vessel, a plurality of membrane units 1 are arranged in a line. In each of the membrane units 1, a plurality of membrane cartridges (not shown) are arranged parallel to one another. Each of the membrane cartridges has filtration membranes like flat membranes located on respective surfaces of a filter plate so as to form a permeated liquid channel between the filter plate and each of the filtration membranes. The permeated liquid channel is in communication with a collecting header via a tube.

A header 2 is located along a direction in which the membrane units 1 are arranged. The header 2 forms a channel with a diameter (large diameter) required to ensure a smooth flow. Branch pipes 3 branch from the header 2 and connect to collecting headers of the respective membrane units 1 via valves 4. Each of the branch pipes 3 forms a channel having a smaller diameter than the header 2. Each of the collecting headers is provided for a casing of the corresponding membrane unit 1.

The header 2 is located at a position of a predetermined height h1. from a liquid level in the reaction vessel. Furthermore, the header 2 has a pressure release valve 5 located beside a terminal thereof in a flow direction at a position of a predetermined height h2 from the header 2.

The header 2 is in communication with a filtrate recovery pipeline 6 at a start point thereof (inlet) in the flow direction. The filtrate recovery pipeline 6 is in communication with a treated water tank 7 and has a first selector valve 8 and a plurality of treated water pumps 9 interposed in the middle thereof. Furthermore, cleaning liquid supply pipeline 11 is connected to the filtrate recovery pipeline 6 via a second selector valve 10.

The cleaning liquid supply pipeline 11 is connected to a submerged pump 12 provided in the treated water tank 7 and has an agitator 13 interposed in the middle thereof. A cleaning chemical liquid supply pipeline 14 is connected between the submerged pump 12 and the agitator 13. The cleaning chemical liquid supply pipeline 14 is in communication with a chemical tank 15 and has a transfer pump 16 interposed in the middle thereof.

The effects of this configuration are described below. During a filtration operation, the valve 4 and the first selector valve 8 are open. The pressure release valve 5 and the second selector valve 10 are closed. In this condition, the treated water pump 9 is driven to exert a suction pressure on the membrane cartridges in each of the membrane units 1. The suction pressure is used as a driving pressure to subject a liquid in the reaction vessel to a membrane separation treatment using the membrane cartridges,

A filtrate having permeated the filtration membrane in each membrane cartridge flows through the tube (not shown) into the collecting header (not shown). The filtrate further flows through the branch pipe 3 to the header 2 and then through the filtrate recovery pipeline 6 into the treated water tank 7.

During a backwashing operation, the valve 4, the pressure release valve 5, and the second selector valve 10 are open. The first selector valve 8 is closed. In this condition, the submerged pump 12 is driven to supply treated water in the treated water tank 7 to the header 2. The transfer pump 16 is driven to supply a cleaning chemical liquid to the header 2 together with the treated water.

The cleaning chemical liquid is mixed into the treated water in the agitator 13, where the concentration of the cleaning chemical liquid is adjusted to a predetermined value. The cleaning chemical liquid then flows through the cleaning liquid supply pipeline 11 into the header 2. The concentration is adjusted by controlling the submerged pump 12 and the transfer pump 16. The cleaning chemical liquid having flown into the header 2 flows from the header 2 through the branch pipes 3 to the collecting headers of the respective membrane units 1- The cleaning chemical liquid then flows into the respective membrane cartridges via the tubes.

Disclosure of the Invention

In the above-described operation, when the cleaning chemical liquid is injected into the plurality of membrane units 1, an appropriate amount of cleaning chemical liquid needs to be injected into each of the membrane units 1. However, the cleaning chemical liquid is not always uniformly injected into the respective membrane units 1.

When the cleaning chemical liquid is injected into the header 2, the pressure inside the header 2 increases. If the pressure increases excessively and the facility has no equipment such as a valve which can reduce the increased pressure, the filtration membranes in the membrane cartridges may be broken by the pressure acting on the membrane cartridges through the branch pipe 3, the collecting header, and the tube or by the inflow of a large amount of cleaning chemical liquid resulting from the pressure. Furthermore, the pressure inside the header 2 is also a cause of the nonuniform injection of the cleaning chemical liquid.

It is possible to provide a structure that uniformizes the amount of cleaning chemical liquid flowing through the branch pipes 3 by using pressure reducing valves (flow regulating valves) provided in the branch pipes 3 to cause a pressure loss while increasing the pressure in the header 2. However, in this case, the resultant flow rate of the chemical liquid may often be lower than the required value. Purging a gas flowing back from membrane units is also impossible.

Furthermore, when the membrane units are connected to the branch pipes 3, the injected chemical liquid remaining in the membrane units may nonuniformly flow out and leak from membrane surfaces in the membrane units due to an uneven pressure in the branch pipe. This may also prevent the chemical liquid remaining in the membrane units from being kept uniform.

Additionally, when the chemical liquid is supplied by gravity, a pump, or the like in the above-described configuration, a water head is limited and needs to be at most 100 kPa. In particular, if each of the membrane cartridges comprises a filtration membrane like a flat membrane, the water head needs to be at most 40 kPa (preferably at most 20 kPa).

The present invention solves these problems. An object of the present invention is to provide a large scale membrane separating installation that can simultaneously and uniformly distribute and contact the cleaning chemical liquid to and with the membrane cartridges in the plurality of membrane units.

To accomplish this object, the present invention provides a large scale membrane separating installation including a plurality of membrane units arranged in a reaction vessel and a plurality of branch pipes branching from a header and connected to collecting headers of the respective membrane units so that a cleaning chemical liquid flows through the header and the branch pipes to the respective membrane units, wherein a cleaning chemical liquid distribution unit includes the header and the branch pipes each having a smaller diameter than the header, and the cleaning chemical liquid distribution unit includes a pipeline configuration uniformly distributing the cleaning chemical liquid to be supplied to the membrane units.

In this configuration, during a cleaning operation with the chemical liquid, a predetermined flow rate of cleaning chemical liquid flows through the header. The cleaning chemical liquid flows through the header and the branch pipes to the plurality of membrane units. At this time, the cleaning chemical liquid distribution unit uses an adjusting function provided by the pipeline configuration to adjust a first force resulting mainly from a pressure head and a second force resulting mainly from a velocity head. The first force acts as a force that pushes the cleaning chemical liquid in the header toward an inlet of each of the branch pipes. The second force acts as a force that sweeps away the cleaning chemical liquid in the header in a pipe axis direction.

Here, when the header is positioned above a liquid level in the reaction vessel, the cleaning chemical liquid flows in a non-full condition, that is, flows with a gas phase present in the upper area of the header. The cleaning chemical liquid thus flows through the branch pipes to the collecting headers of the respective membrane units. Moreover, to uniformly hold the chemical liquid injected into the branch pipes, even in membrane units each located at the tip of the corresponding branch pipe, it is necessary to make the pressure in the branch pipes uniform even after the cleaning chemical liquid has passed through the branch pipes.

At this time, to allow the cleaning chemical liquid to flow uniformly into the branch pipes, it is necessary to uniformly apply the supply pressure in the header to the inlets of the branch pipes. Factors determining the pressure (hereinafter referred to as the branch pipe inlet supply pressure) include the amount of cleaning chemical liquid supplied and flowing into the header, the supply pressure (the pressure of the pump or the water head in a vessel from which the cleaning chemical liquid is fed), the flow velocity of the cleaning chemical liquid flowing through the header, the ratio of the header diameter and the branch pipe diameter, the resistance of the pipeline, and gravity.

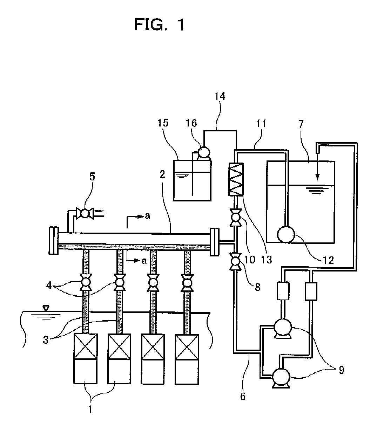

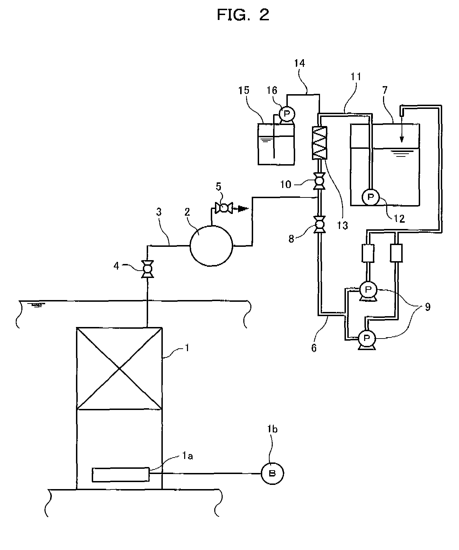

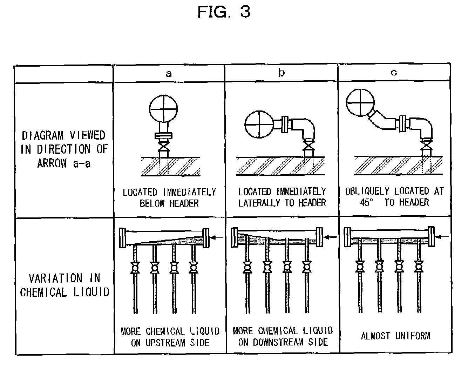

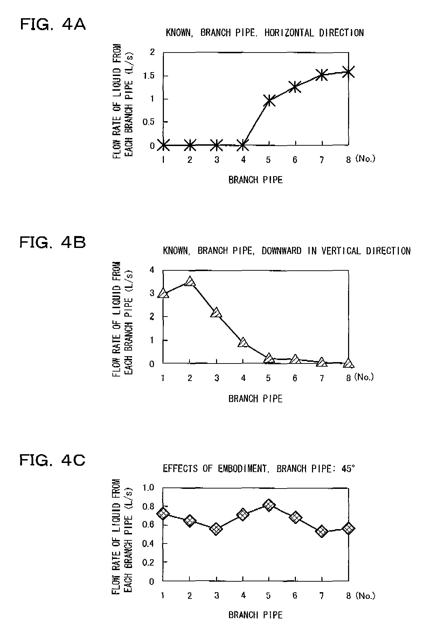

A detailed description will be given below. FIGS. 1 and 2 show a configuration similar to that shown in FIG. 19. In FIG. 2, reference numeral 1a denotes an air diffusing pipe in the membrane unit 1. Reference numeral 1b denotes a blower. FIG. 3 is a diagram as viewed in the direction of arrow a-a in FIG. 1 and shows three cases in which the branch pipes 3 have different structures. FIG. 4(a), (b) and (c) are graphs showing the flow rate of the cleaning chemical liquid flowing from each of the branch pipes 3 to the corresponding membrane unit 1 in each of the configurations shown in FIG. 3. In the graph, for reference numerals identifying the branch pipes 3, the branch pipe 3 located closest to the start point (inlet) of the header 2 in a flow direction is denoted by NO. 1. The branch pipe 3 located closest to the terminal of the header 2 in the flow direction is denoted by NO. 8.

In the above-described configuration, when the branch pipes 3 are connected to the header 2 in a horizontal direction, the flow velocity of the cleaning chemical liquid, one of the factors uniformizing the branch pipe inlet supply pressure, has a greater impact than the other factors.

That is, as shown in FIG. 4(a), if the flow velocity of the cleaning chemical liquid is high, the cleaning chemical liquid has more difficulty flowing into the branch pipes 3 located closer to the start point (inlet) of the header. The cleaning chemical liquid flows more easily into the branch pipes 3 located closer to the terminal of the header 2.

This phenomenon is attributed to the following. That is, at the start point of the header, the second force (resulting mainly from the velocity head) acts more dominantly than the first force (resulting mainly from the pressure head). The force sweeping away the cleaning chemical liquid in the pipe axis direction of the header 2 dominates the force pushing the cleaning chemical liquid toward the inlet of each branch pipe. On the other hand, at the terminal of the header, the flow of the cleaning chemical liquid impacts the terminal of the header 2 to increase the pressure head.

When the branch pipes 3 are arranged so as to hang from the header 2 in a vertical direction, the pressure of the cleaning chemical liquid, one of the factors uniformizing the branch pipe inlet supply pressure, has a greater impact than the other factors.

That is, as shown in FIG. 4(b), the cleaning chemical liquid flows more easily into the branch pipes 3 located closer to the start point (inlet) of the header. The amount of cleaning chemical liquid reaching the terminal of the header 2 decreases consistently with the distance to the terminal of the header 2, making it more difficult for the cleaning chemical liquid to flow into the branch pipes 3.

This phenomenon is attributed to the following. That is, in addition to the pressure head resulting from the supply pressure of the pump, the gravity acts as a force pushing the cleaning chemical liquid toward the inlet of each branch pipe. Thus, at the start point of the header, the first force (resulting mainly from the pressure head) acts more dominantly than the second force (resulting mainly from the velocity head). The force pushing the cleaning chemical liquid toward the inlet of the branch pipe dominates the force sweeping away the cleaning chemical liquid in the pipe axis direction of the header 2. As a result, most of the cleaning chemical liquid flows into the branch pipes 3 located closer to the start point of the header, reducing the amount of cleaning chemical liquid reaching the terminal of the header 2.

Thus, according to the present invention, with the "gravity" and "velocity head" taken into account, the cleaning chemical liquid distribution unit includes the pipeline configuration adjusting the first force and the second force. This allows the cleaning chemical liquid to flow uniformly to the plurality of membrane units through the header and the branch pipes.

A specific configuration of the cleaning chemical liquid distribution unit is as follows. The header is located along a direction in which the membrane units are arranged and along a horizontal direction. Mounting axes of the branch pipes are arranged parallel to one another. The header is positioned above a. liquid level in the reaction vessel. Each of the branch pipes is inclined with a falling gradient from the header toward the collecting header at a predetermined angle.

In this configuration, for example, the branch pipes 3 are inclined at 45 ° to the header 2 to adjust the "gravity" and "velocity head" so as to uniformize the branch pipe inlet supply pressure.

That is, the rate of the gravity in the total force of the gravity and the "pushing force", the first force, to which the gravity is added, is adjusted by the inclination of the branch pipes, to inhibit the flow of an excessive amount of cleaning chemical liquid into the branch pipes located closer to the start point of the header, while the cleaning chemical liquid is swept away toward the terminal of the header by the "sweeping force", the second force. Thus, as shown in FIG. 4(c), the branch pipe inlet supply pressure is uniformized such that the cleaning chemical liquid flows uniformly into all the branch pipes 3.

Furthermore, in this configuration, each branch pipe has no valve reducing the pressure. The branch pipe is not full of the cleaning chemical liquid, but a gas phase is present therein. The branch pipe is also in communication with the air, and all the branch pipes are kept at a fixed pressure, the atmospheric pressure.

Thus, the chemical liquid remaining inside the membrane units can be kept uniform from membrane surfaces in the membrane units each connected to the tip of the corresponding branch pipe.

That is, since each of the branch pipes is inclined with the falling gradient from the header toward the collecting header at the predetermined angle, the cleaning chemical liquid can be uniformly distributed to and contacted with the plurality of membrane units through the header and the branch pipes.

Another specific configuration of the cleaning chemical liquid distribution unit is as follows. The header is located along the direction in which the membrane units are arranged and along the horizontal direction. The mounting axes of the branch pipes are arranged parallel to one another. The header is positioned above the liquid level in the reaction vessel. Each of the branch pipes has an overflow portion at a predetermined height position above the header.

In this configuration, the pressure head in the header is set to a value at which the cleaning chemical liquid is lifted to the overflow portion of each branch pipe. In other words, the predetermined height position of the overflow portion, formed in the branch pipe, is set on the basis of the pressure head generated in the cleaning chemical liquid in the header by the supply pressure of the cleaning chemical liquid (the supply pressure of the pump or the like) so that when the cleaning chemical liquid flows through the overflow portion, a gas phase is present in an upper area of the overflow portion.

During cleaning with the chemical liquid, the cleaning chemical liquid flows so as to fill the header. The cleaning chemical liquid flowing from the header to the branch pipes overflows through the overflow portion with a gas phase present in the upper area of the overflow portion and flows to the collecting headers of the respective membrane units.

At this time, the interior of the header is full of the cleaning chemical liquid to inhibit a possible nonuniform branch pipe inlet supply pressure resulting from the velocity head. Furthermore, the gravity does not act as the "pushing force" pushing the cleaning chemical liquid toward the inlet of the branch pipe. Instead, only the pressure head (the supply pressure of the pump or the like) acts as the "pushing force", the first force. The pressure head lifts the cleaning chemical liquid to the overflow portion against the gravity to allow the cleaning chemical liquid to overflow.

Therefore, since the branch pipe has the overflow portion at the predetermined height position above the header, the cleaning chemical liquid can be uniformly distributed to and contacted with the plurality of membrane units through the header and the branch pipes.

Furthermore, an air open portion may be provided in the overflow portion of each branch pipe. In this case, the overflow portion is open to the air at the air open portion. Thus, when the cleaning chemical liquid overflows through the overflow portion, the gas phase in the overflow portion is prevented from causing air lock. The cleaning chemical liquid flows naturally downward through the branch pipe under the atmospheric pressure to the collecting header of the corresponding membrane unit. The cleaning chemical liquid can thus be uniformly distributed to and contacted with the plurality of membrane units through the header and the branch pipes.

Another specific configuration of the cleaning chemical liquid distribution unit is as follows. The header is located along the direction in which the membrane units are arranged and along the horizontal direction. The mounting axes of the branch pipes are arranged parallel to one another. The header is positioned below the liquid level in the reaction vessel. Each of the branch pipes is connected to the header below the liquid level.

In this configuration, the cleaning chemical liquid supplied to the header during cleaning with the chemical liquid flows to each branch pipe so as to fill the header. The cleaning chemical liquid then flows to the collecting header of each membrane unit through the corresponding branch pipe.

At this time, since the header is positioned below the liquid level in the reaction vessel, the interior of the header is full of the cleaning chemical liquid. This inhibits a possible nonuniform branch pipe inlet supply pressure resulting from the velocity head.

Furthermore, the water head corresponding to the distance from the liquid level to the header acts as a back pressure. Consequently, the gravity does not act as the "pushing force" pushing the cleaning chemical liquid toward the branch pipe inlet. Thus, only the pressure head (the supply pressure of the pump or the like) acts as the "pushing force", the first force, to push the cleaning chemical liquid toward the branch pipe inlet. The cleaning chemical liquid can thus be uniformly distributed to and contacted with the plurality of membrane units through the header and the branch pipes.

Another specific configuration of the cleaning chemical liquid distribution unit is as follows. The header is located along the direction in which the membrane units are arranged and along the horizontal direction. The mounting axes of the branch pipes are arranged parallel to one another. The header is positioned at or above the liquid level. The header is divided into a plurality of short pipelines each of which is located for every predetermined number of membrane units and each of which is in communication with a cleaning chemical liquid supply source at a central part thereof in a pipe axis direction.

In the above descried configuration, the cleaning chemical liquid supplied to each header during cleaning with the chemical liquid flows through the branch pipes to the collecting headers of the respective membrane units.

At this time, since each of the short pipes of the header is present for the corresponding one of the membrane units and each short pipe is in communication with the cleaning chemical liquid supply source at the central part thereof in the pipe axis direction, the liquid level and velocity head in the short pipes are inhibited from being nonuniformly distributed. The cleaning chemical liquid can thus be uniformly distributed to and contacted with the plurality of membrane units through the short pipes of the header and the branch pipes.

Another specific configuration of the cleaning chemical liquid distribution unit is as follows. The header is located at an equal distance in the vertical direction from the plurality of membrane units circularly arranged in the reaction vessel. The branch pipes branching from the header are radially arranged. The header is positioned at or above the liquid level.

In this configuration, the cleaning chemical liquid supplied to the header during cleaning with the chemical liquid flows through the branch pipes to the collecting headers of the respective membrane units.

At this time, since the cleaning chemical liquid flows from the header into the radially branching branch pipes, the possible nonuniform distribution of the velocity head in the header is avoided. The cleaning chemical liquid can thus be uniformly distributed to and contacted with the plurality of membrane units through the header and the branch pipes.

Another specific configuration of the cleaning chemical liquid distribution unit is as follows. The header is located along the direction in which the membrane units are arranged and along the horizontal direction. The mounting axes of the branch pipes are arranged parallel to one another. The header is in communication with the cleaning chemical liquid supply source at the inlet of the header at one end thereof in the pipe axis direction. The header has a pressure control device provided at the other end thereof in the pipe axis direction to maintain a pressure at less than or equal to a set value.

In this configuration, if an excessive amount of cleaning chemical liquid is injected into the header to exert an excessive pushing force pushing the cleaning chemical liquid toward the inlet of each branch pipe, the pressure control device is activated to release the excessive pressure, preventing the excessive pressure from acting on the membrane units.

The pressure control device includes a pressure sensing device, a valve device that is in communication with the header, and a control device that opens the valve device when a pressure detected by the pressure sensing device reaches an upper limit value.

Another specific configuration of the cleaning chemical liquid distribution unit is as follows. The header is located along the direction in which the membrane units are arranged and along the horizontal direction. The header is in communication with the cleaning chemical liquid supply source at the inlet thereof at one end thereof in the pipe axis direction and with a return pipe at the outlet thereof at the other end thereof in the pipe axis direction. The return pipe is in communication with the inlet of the header or the cleaning chemical liquid supply source.

In this configuration, during cleaning with the chemical liquid, a sufficient amount of cleaning chemical liquid is allowed to flow to the header. The cleaning chemical liquid flowing through the header flows through the header and then the branch pipes to the collecting headers of the respective membrane units. Part of the cleaning chemical liquid returns to the inlet of the header or the cleaning chemical liquid supply source through the return pipe.

since the cleaning chemical liquid circulates through the header and the return pipe, the velocity head is inhibited from being nonuniformly distributed. This prevents a possible nonuniform branch pipe inlet supply pressure caused by the nonuniform distribution of the velocity head. Furthermore, the "pushing force", the first force, acts substantially uniformly over the entire length of the header to uniformize the branch pipe inlet supply pressure among all the branch pipes. The cleaning chemical liquid can thus be uniformly distributed to and contacted with the plurality of membrane units through the header and the branch pipes.

In particular, when the branch pipes are connected to the header in the horizontal direction, the gravity does not act as the force pushing the cleaning chemical liquid toward the inlet of each branch pipe. Instead, only the pressure head (the supply pressure of the pump or the like) acts as the "pushing force", the first force. The cleaning chemical liquid can thus be uniformly distributed to and contacted with the plurality of membrane units through the header and the branch pipes.

The header is preferably located at the liquid level position or above the liquid level position in the reaction vessel in the horizontal direction. However, the header may be located below the liquid level in the reaction vessel. Furthermore, each branch pipe is preferably connected to the header in the horizontal direction. However, the branch pipe may be connected on a slant to the header.

When the header is positioned above the liquid level in the reaction vessel, the cleaning chemical liquid flows through the header in a non-full condition in which a gas phase is present in the upper area of the header. The cleaning chemical liquid thus flows through each branch pipe to the collecting header of the corresponding membrane unit.

Brief Description of the Drawings

FIG. 1 is a front view of a large scale membrane separating installation according to an embodiment of the present invention;
FIG. 2 is a side view of the large scale membrane separating installation according to the embodiment;
FIG. 3 is a sectional view taken along line a-a in FIG. 1 illustrating differences in effects between the embodiment of the present invention and conventional embodiments;
FIG. 4 (a), (b) and (c) are graphs showing differences in effects among the configurations shown in FIG. 3;
FIG. 5 is an enlarged side view showing an essential part of the large scale membrane separating installation according to the embodiment of the present invention;
FIG. 6 is an enlarged front view showing an essential part of the large scale membrane separating installation according to the embodiment;
FIG. 7(a) and (b) are enlarged side views showing an essential part of a large scale membrane separating installation according to another embodiment of the present invention, wherein FIG. 7(a) shows that a header is located above a liquid level and FIG. 7(b) shows that the header is located at the liquid level;
FIG. 8 is a schematic diagram showing a large scale membrane separating installation according to another embodiment of the present invention wherein a header is located below the liquid level inside a vessel;
FIG. 9 is a schematic diagram showing a large scale membrane separating installation according to another embodiment of the present invention wherein a header is located below the liquid level outside the vessel;
FIG. 10 is a front view of a large scale membrane separating installation according to another embodiment of the present invention;
FIG. 11 is a plan view of a large scale membrane separating installation according to another embodiment of the present invention;

FIG. 12 is an enlarged side view showing an essential part of the large scale membrane installation device according to the embodiment shown in FIG. 11;

FIG. 13 is a diagram showing the configuration of a pressure control device according to another embodiment of the present invention;

FIG. 14 is a front view of a large scale membrane separating installation according to another embodiment of the present invention;

FIG. 15 is a side view of the large scale membrane separating installation according to the embodiment shown in FIG. 14;

FIG. 16 is a front view of an essential part of a large scale membrane separating installation according to another embodiment of the present invention;

FIG. 17 is a diagram showing effects of the large scale membrane separating installation according to the present invention;

FIG. 18(a), (b) and (c) are diagrams illustrating differences in effects between the embodiments of the present invention and conventional embodiments; and

FIG. 19 is a front view showing a conventional large scale membrane separating installation.

Best Mode for Carrying Out the Invention

Embodiments of the present invention will be described with reference to the drawings. The basic configuration of large scale membrane separating installations according to the present embodiments is similar to that described with reference to FIGS. 1, 2, and 16. Thus, the above-described reference numerals are also used in the description below, and the description of the basic configuration is omitted.

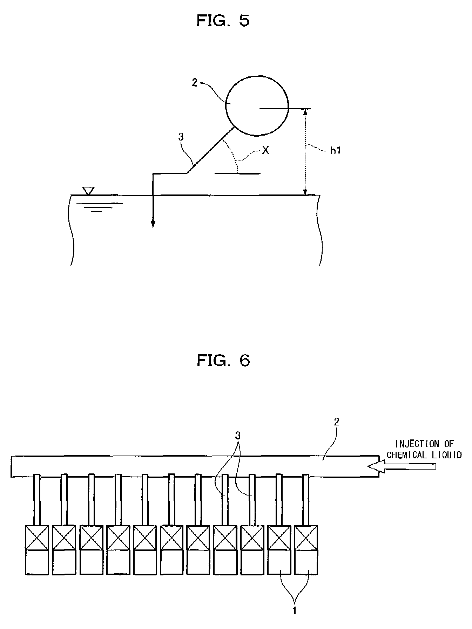

In FIGS. 5 and 6, a plurality of membrane units 1 are arranged in a reaction vessel. A header 2 is located along a direction in which the membrane units 1 are arranged and along a horizontal direction. A plurality of branch pipes 3 branching from the header 2 are arranged parallel to one another. Each of the branch pipes 3 is connected to a collecting header (not shown) of a corresponding one of the membrane units 1.

The header 2 forms a channel with a diameter (large diameter) required to ensure a smooth flow. Each of the branch pipes 3 forms a channel with a diameter smaller than that of the header 2. Each of the collecting headers is provided for a casing of a corresponding one of the membrane units 1.

The header 2 is located in the horizontal direction at a predetermined height hl (for example, 1 m) from a liquid level in the reaction vessel. Each branch pipe 3 is inclined with a falling gradient from the header 2 toward the corresponding collecting header at a predetermined angle X (0<X<90°).

In this configuration, during cleaning with a chemical liquid, a submerged pump 12 and a transfer pump 16 are driven to allow a predetermined amount of cleaning chemical liquid to flow through the header 2. At this time, since the header 2 is positioned above the liquid level in the reaction vessel, the cleaning chemical liquid flows through the header in a non-full condition, that is, with a gas phase present in an upper area of the header 2. The cleaning chemical liquid then flows uniformly through the branch pipes 3 to the collecting headers of the respective membrane units.

At this time, to allow the cleaning chemical liquid to flow uniformly into the branch pipes, it is essential to uniformize a branch pipe inlet supply pressure in the header 2. Thus, in the present embodiment, with the "gravity" and "velocity head" taken into account, the branch pipes 3 are inclined at 45 ° to the header 2 to allow a force resulting from the "gravity" and "velocity head" to contribute to uniformizing the branch pipe inlet supply pressure.

That is, the rate of gravity in the total force of the gravity and a "pushing force", a first force, to which the gravity is added, is adjusted by the inclination of the branch pipes, to inhibit the flow of an excessive amount of cleaning chemical liquid into the branch pipes located closer to the start point (inlet) of the header 2, while the cleaning chemical liquid is swept away toward the terminal of the header 2 by a "sweeping force", a second force. Thus, the branch pipe inlet supply pressure is uniformized such that the cleaning chemical liquid flows uniformly into all the branch pipes 3.

The predetermined inclination of each branch pipe 3 required to uniformize the branch pipe inlet supply pressure is determined mathematically or on the basis of the rule of thumb taking into account the amount of cleaning chemical liquid supplied and flowing into the header 2, the supply pressure, the flow velocity of the cleaning chemical liquid flowing through the header 2, the ratio of the header diameter to the branch pipe diameter, the pipeline resistance, the gravity, and the like.

That is, the branch pipe inlet supply pressure can be uniformized by setting the predetermined inclination of each branch pipe 3 on the basis of the above-described elements. The predetermined inclination of the branch pipe 3 can be set on the basis of conditions such as the number of the membrane units 1, the number of membrane cartridges in each of the membrane units 1, and the diameter of the piping.

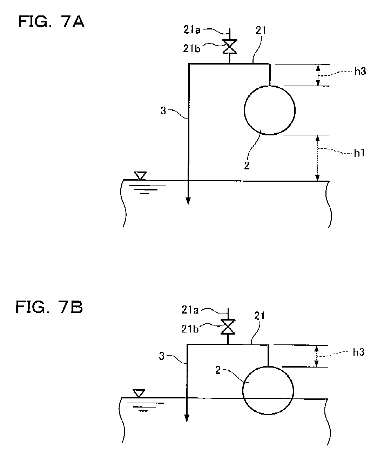

The branch pipe inlet supply pressure in the header 2 can also be uniformed by a configuration shown in FIGS. 7(a) and 7(b). In FIGS. 7(a) and 7(b), the header 2 is located along the direction in which the membrane units 1 are arranged and along the horizontal direction. The plurality of branch pipes 3 are arranged parallel to one another. The header 2 is positioned at or above the liquid level in the reaction vessel. Each of the branch pipes 3 is connected to the top of the header 2. The branch pipe 3 has an overflow portion 21 at a predetermined height position h3 above the header 2.

The overflow portion 21 of the branch pipe 3 is located at the predetermined height position h3. The predetermined height position h3 is set on the basis of the pressure head generated in the cleaning chemical liquid in the header by the supply pressure of the cleaning chemical liquid (the supply pressure of a pump). This results in the presence of a gas phase in an upper area of the overflow portion 21 when the cleaning chemical liquid flows through the overflow portion 21.

Furthermore, the distance from the liquid level to the header 2 is at most 0.2 m, preventing a siphon from being established in the branch pipe 3. The siphon may vary the flow rate among the branch pipes 3.

Furthermore, the overflow portion 21 may have an air open portion 21a including an on-off valve 21b. The air open portion 21a and the on-off valve 21b are not necessarily required for the overflow portion 21.

In this configuration, the cleaning chemical liquid supplied to the header 2 during cleaning with the chemical liquid flows so as to fill the header 2. The cleaning chemical liquid flowing through each branch pipe 3 overflows through the overflow portion 21 and flows to the collecting header of the corresponding membrane unit 1. The gas phase is present in the upper area of the overflow portion 21 in the branch pipe 3.

At this time, the interior of the header 2 is full of the cleaning chemical liquid to increase the effective channel cross section (the substantial channel cross section over which the cleaning chemical liquid flows) of the header 2 compared to the effective channel cross section observed in the non-full condition. This inhibits a possible nonuniform branch pipe inlet supply pressure resulting from the velocity head.

Since the branch pipe 3 has the overflow portion 21 at the position of the predetermined height h3 from the header 2, the gravity does not act as the "pushing force" pushing the cleaning chemical liquid toward an inlet of the branch pipe. Instead, only the pressure head (in this case, the supply pressure of the pump) acts as the "pushing force" pushing the cleaning chemical liquid toward the branch pipe inlet to lift the cleaning chemical liquid to the overflow portion 21 against the gravity. The cleaning chemical liquid then overflows through the overflow portion 21.

Consequently, the branch pipe 3 forms the overflow portion 21 at the predetermined height position h3 above the header 2, The cleaning chemical liquid can thus be uniformly distributed to and contacted with the plurality of the membrane units 1 through the header 2 and the branch pipes 3.

Furthermore, when the overflow portion 21 has the air open portion 21a and the on-off valve 21b, the on-off valve 21b is open during cleaning with the chemical liquid. In this condition, the pressure head in the cleaning chemical liquid supplied to the header 2 during cleaning with the chemical liquid lifts the cleaning chemical liquid to the overflow portion 21 against the gravity. The cleaning chemical liquid thus overflows through the overflow portion 21 of each branch pipe 3 with the gas phase present in the upper area of the overflow portion 21. The cleaning chemical liquid then flows to the collecting header of the corresponding membrane unit 1

At this time, the overflow portion 21 is open to the air at the air open portion 21a, preventing the gas phase in the overflow portion 21 from causing air lock. The cleaning chemical liquid flows naturally downward through each branch pipe 3 under the atmospheric pressure to the collecting header of the corresponding membrane unit 1. The cleaning chemical liquid can thus be uniformly distributed to and contacted with the plurality of membrane units 1 through the header 2 and the branch pipes 3.

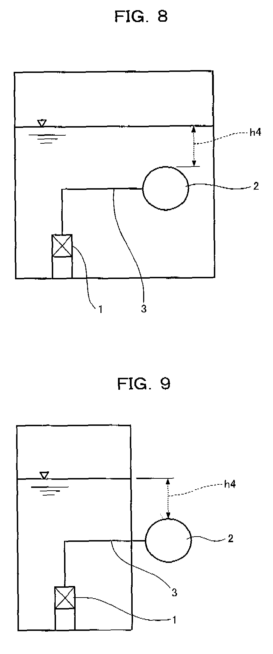

The branch pipe inlet supply pressure in the header 2 can also be uniformized by a configuration shown in FIGS. 8 and 9. In FIGS. 8 and 9, the header 2 is located along the direction in which the membrane units 1 are arranged and along the horizontal direction. The plurality of branch pipes 3 are arranged parallel to one another. The header 2 is positioned below the liquid level in the reaction vessel at a predetermined distance h4 therefrom. The header 2 may be located below the liquid level in the reaction vessel as shown in FIG. 8 or located outside the reaction vessel as shown in FIG. 9. In this case, each of the branch pipes 3 may be connected at any angle to the header 2.

In this configuration, the cleaning chemical liquid supplied to the header 2 during cleaning with the chemical liquid flows to the branch pipes 3 so as to fill the header 2. The cleaning chemical liquid then flows through the branch pipes 3 to the collecting headers of the respective membrane units.

At this time, since the header 2 is positioned below the liquid level in the reaction vessel, the interior of the header 2 is full of the cleaning chemical liquid. Consequently, the effective channel cross section (the substantial channel cross section over which the cleaning chemical liquid flows) of the header 2 increases compared to the effective channel cross section observed in the non-full condition. This inhibits a possible nonuniform branch pipe inlet supply pressure resulting from the velocity head.

Furthermore, the water head corresponding to the distance h4 from the liquid level to the header 2 acts as a back pressure. Thus, the gravity does not act as the "pushing force" pushing the cleaning chemical liquid toward the branch pipe inlet. Instead, only the pressure head (in this case, the supply pressure of the pump) acts as the "pushing force", the first force. The cleaning chemical liquid can thus be uniformly distributed to and contacted with the plurality of membrane units through the header 2 and the branch pipes 3.

In this case, the channel cross section A of the header 2, the channel cross section B of each branch pipe 3, and the number of the branch pipes 3 desirably satisfy the relationship $A > B \times N \times 0.2$.

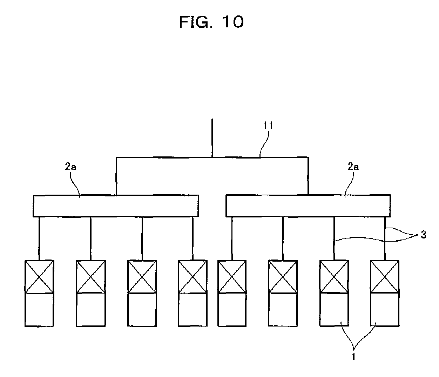

The branch pipe inlet supply pressure in the header 2 can also be uniformized by a configuration shown in FIG. 10. In FIG. 10, the header 2 is located along the direction in which the membrane units 1 are arranged and along the horizontal direction. The header 2 is positioned at or above the liquid level. The header 2 is divided into a plurality of short pipes 2a each corresponding to a predetermined number of membrane units 1. Each of the short pipes 2a is in communication with a cleaning liquid supply pipeline 11 at a central part thereof in a pipe axis direction. The branch pipes 3 can be connected to the header 2 either in the horizontal direction or in a vertical direction or in an inclining direction.

In this configuration, the cleaning chemical liquid supplied to the header 2 during cleaning with the chemical liquid flows through the branch pipes 3 to the collecting headers of the respective membrane units. At this time, since the header 2 is divided into the short pipes 2a and each header 2 is in communication with the cleaning liquid supply pipeline 11 at the central part thereof in the pipe axis direction, the liquid level and velocity head in the short pipes 2a of each header 2 are inhibited from being nonuniformly distributed. The cleaning chemical liquid can thus be uniformly distributed to and contacted with the plurality of membrane units 1 through the header 2 and the branch pipes 3.

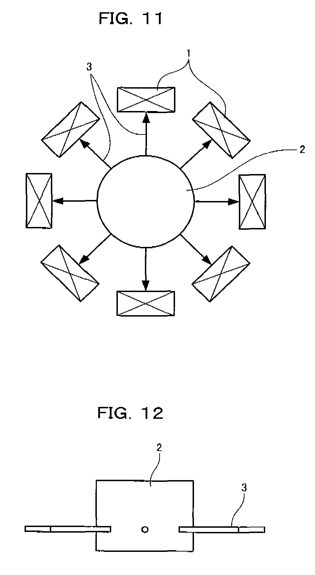

The branch pipe inlet supply pressure in the header 2 can also be uniformized by a configuration shown in FIGS. 11 and 12. In FIGS. 11 and 12, the plurality of membrane units 1, located in the reaction vessel, are circularly arranged. The header 2 is located at an equal distance in the vertical direction from the membrane units 1, that is, at a central position of the membrane units 1. The header 2 is located at or above the liquid level. The branch pipes 3 are arranged so as to branch radially from the header 2 and connected to the collecting headers of the respective membrane units 1.

In this configuration, the cleaning chemical liquid supplied to the header 2 during cleaning with the chemical liquid flows through the branch pipes 3 to the collecting headers of the respective membrane units 1. At this time, since the cleaning chemical liquid flows into the branch pipes 3 branching radially from the header 2, the possible nonuniform distribution of the velocity head in the header 2 is avoided. The pressure in the header 2 acts uniformly on the branch pipes 3, so that the cleaning chemical liquid can be uniformly distributed to and made in contact with the plurality of membrane units 1 through the header 2 and the branch pipes 3.

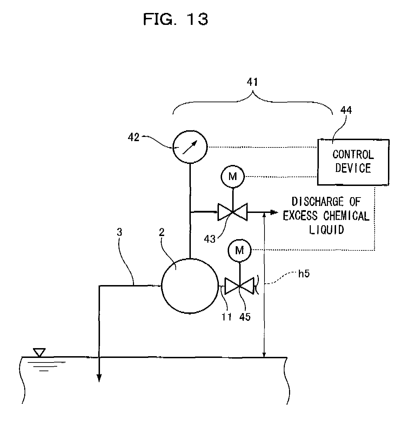

Furthermore, as shown in FIG. 13, a pressure control device 41 maintaining the pressure at less than or equal to a set value may be provided at the terminal of the header 2 in order to prevent an excessive pressure from acting on the membrane units 1 through the header 2 and the branch pipes 3. In this description, the header 2 is positioned above the liquid level. However, the header 2 may be located below the liquid level.

The pressure control device 41 is made up of a pressure sensing device 42 that measures the pressure at the terminal the header 2, a valve device 43 installed at a position of a predetermined height h5 (for example, 2 m) from the liquid level in communication with the header 2, a control device 44 that opens the valve device 43 when the pressure detected by the pressure sensing device 42 reaches an upper limit value, and a valve device 45 provided in the cleaning liquid supply pipeline 11. A second selector valve 10 may be configured so as to vary the flow rate instead of providing the valve device 45.

In this configuration, the design of the header 2 and branch pipes 3 and the total inflow amount of cleaning chemical liquid are adjusted such that for example, the pressure in each branch pipe 3 is set to about 0 to 20 kPa. If the inflow of the liquid undergoes a high resistance owing to unexpected dirt or the like in the membrane unit, injection at a standard flow rate may result in an excessive pushing force pushing the cleaning chemical liquid toward the inlet of the branch pipe. Then, when the detected pressure measured by the pressure sensing device 42 of the pressure control device 41 reaches the upper limit value (which is set at, for example, 20 kPa), the control device 44 controllably opens and closes the valve devices 43 and 45 to release the excessive pressure. This prevents the excessive pressure from acting on the corresponding membrane unit 1, to control the flow rate.

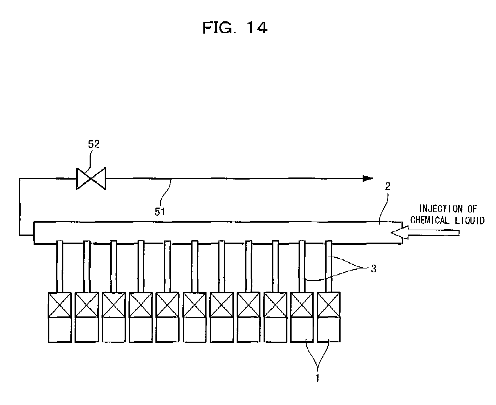

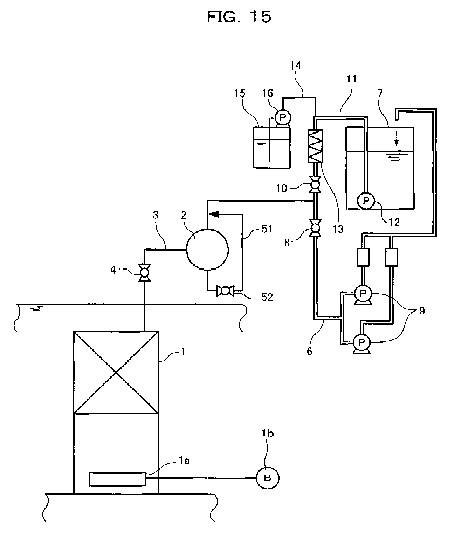

The branch pipe inlet supply pressure in the header 2 can also be uniformized by a configuration shown in FIGS. 14 and 15.

The header 2 is located along the direction in which the membrane units 1 are arranged. The branch pipes 3 branching from the header 2 are connected to the collecting headers of the respective membrane unit 1 (not shown). The header 2 is located along the direction in which the membrane units 1 are arranged and along the horizontal direction. The header 2 is positioned at the liquid level in the reaction vessel or at a predetermined height from the liquid level. The branch pipes 3 are connected to the header 2 in the horizontal direction.

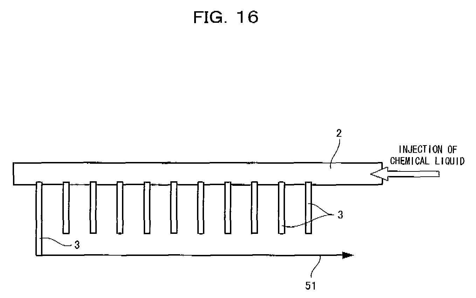

The header 2 is in communication with the cleaning liquid supply pipeline 11 at the start point (inlet) thereof in the flow direction. A first end of a return pipe 51 is connected to the terminal (outlet) of the header 2 in the flow direction. A second end of the return pipe 51 is in communication with the inlet of the header 2. An on-off valve 52 is provided in the return pipe 51. The second end of the return pipe 51 can be connected to the cleaning liquid supply pipeline 11. Furthermore, as shown in FIG. 16, the first end of the return pipe 51 may be connected to the branch pipe 3 positioned at the terminal of the header 2.

In this configuration, during a filtration operation, a valve 4 and a first selector valve 8 are open. The on-off valve 52 and the second selector valve 10 are closed. In this condition, a treated water pump 9 is driven to apply a suction pressure to the membrane cartridges in each of the membrane units 1. The suction pressure is used as a driving pressure to perform a filtration operation using the membrane cartridges. A filtrate having permeated a filtration membrane flows through a tube (not shown) into the collecting header (not shown). The filtrate further flows through the branch pipe 3 to the header 2 and then through a filtrate recovery pipeline 6 into the treated water tank 7.

During a backwashing operation, the valve 4, the second selector valve 10 and the on-off valve 52 are open, and the first selector valve 8 is closed. In this condition, the submerged pump 12 is driven to supply treated water in the treated water tank 7. The transfer pump 16 is driven to supply the cleaning chemical liquid.

At this time, since the header 2 is positioned above the liquid level in the reaction vessel, the cleaning chemical liquid flows through the header in the non-full condition, that is, with the gas phase present in the upper area of the header 2. The cleaning chemical liquid flows through the header 2 and the branch pipes 3 to the collecting headers of the respective membrane units. Part of the cleaning chemical liquid returns to the inlet of the header 2 or the cleaning liquid supply pipeline 11 through the return pipe 51. The cleaning chemical liquid thus circulates through the header 2 and the return pipe 51.

This inhibits the velocity head from being nonuniformly distributed, preventing a possible nonuniform branch pipe inlet supply pressure resulting from the nonuniform distribution of the velocity head. The "pushing force", the first force, acts substantially uniformly over the entire length of the header 2 to uniformize the branch pipe inlet supply pressure among all the branch pipes 3. The cleaning chemical liquid can thus be uniformly distributed to and contacted with the plurality of membrane units 1 through the header 2 and the branch pipes 3.

Furthermore, since the branch pipes 3 are connected to the header 2 in the horizontal direction, the gravity does not act as the "pushing force" pushing the cleaning chemical liquid toward the branch pipe inlet- Instead, only the pressure head (in this case, the supply pressure of the pump) acts as the "pushing force", the first force. The cleaning chemical liquid can thus be uniformly distributed to and contacted with the plurality of membrane units 1 through the header 2 and the branch pipes 3.

Embodiments

Description will be given below of embodiments based on calculations according to the present invention.

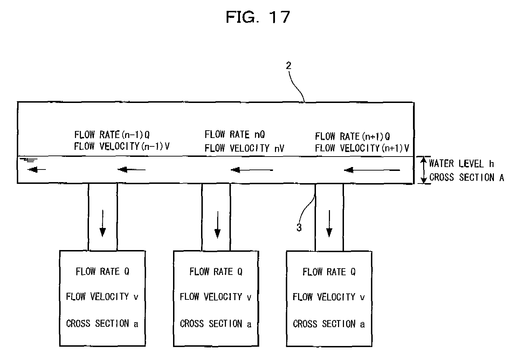

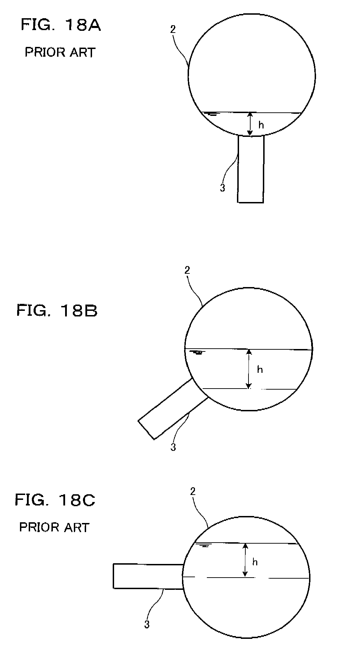

1. The cleaning chemical liquid flows through the header 2 in the non-full condition (see FIG. 17).
1-1. The branch pipe 3 is located in the vertical direction as shown in FIG. 18(a).

When Q=the flow rate in each branch pipe, a=the channel cross section of the branch pipe, v=the flow velocity in the branch pipe, V=the flow velocity in the header, A=the channel cross section actually occupied by the cleaning chemical liquid in the header, h=the water level in the header, and g=9.8 m/s², and it is assumed that the installation has a single branch pipe, then Q=v×a=sqrt (2gh)×a=VA

Thus, determining the channel cross section a of the branch pipe and the flow rate Q in the branch pipe allows the water level h in the header 2 to be determined according to the formula:

$$h=Q \times Q / (a \times a \times 2g).$$

Here, when the branch pipe diameter is assumed to be 50 mm and the flow rate in the branch pipe is assumed to be 60 litters/min., a=0.002 m², Q=0.001 m³/sec, and v=0.5. The water depth in the header 2 is h=0.001×0.001/ (0.002×0.002×2×9.8) =0.0128 m=12.8 mm.
a) The header 2 has a diameter of 150 mm.
In this case, A=0.00073 m² and V=Q/A=1.37 m/s.
Thus, to allow the cleaning chemical liquid to flow uniformly through the 10 branch pipes 3, it is necessary to set the inflow velocity to 10V=13.7 m/s.

In a free fall from a height of 1 m, the cleaning chemical liquid flows in at a flow velocity of 4.4 m/s. Thus, for example, when the cleaning chemical liquid is allowed to flow through the header 2 of diameter 150 mm at the same flow rate, A=10Q/4.4=0.01/4.4=0.00227.
In this case, h=0.027 and

$$v=sqrt(2gh)=sqrt(2 \times 9.8 \times 0.027)=0.73.$$

The flow rate Q1 in the first branch pipe:

$$Q1=0.73 \times 0.002=0.00146.$$

The cleaning chemical liquid flows through the first branch pipe at a flow rate about 1.5 times as large as a design value.
The flow rate Q2 in the second branch pipe:

Q2 is equivalent to Q1 on the basis of A=0.009854/4.4=0.00224. As a result, the flow rates in the first two branch pipes amount to nearly 30% of the total value. Thus, the cleaning chemical liquid does not flow to the last branch pipe.

1-2. The branch pipe 3 is obliquely located at an angle of 45° to the header as shown in FIG. 18(b)
As in the above-described case, Q=v×a=sqrt(2gh)×a=VA and h=Q×Q/(a×a×2g).
Here, when the branch diameter is assumed to be 50 mm and the flow rate is assumed to be 60 litters/min. a=0.002 m², Q=0.001 m³/sec, and the water depth h in the header 2 = 0.001×0.001/(0.002×0.002×2×9.8)=0.0128 m=12.8 mm.

a) The header 2 has a diameter of 150 mm.

The center of the branch pipe is 0.022 m away from the bottom surface thereof.

The total water depth is 0.0128+0.022=0.0348.

In this case, A=0.00298 $m^2$ and V=Q/A=0.336 m/s.

This is the velocity at which the cleaning chemical liquid flows in a free fall from a height of about 60 cm.

Therefore, when the header 2 has a diameter of 150 mm, injection from a height of about 60 cm allows the cleaning chemical liquid to be uniformly fed into each branch pipe.

1-3. The branch pipe 3 is located in the horizontal direction as shown in FIG. 18(c).

As in the above-described case, Q=vxa=sqrt(2gh) ×a=VA and h=Q×Q/(axa×2g).

Here, when the branch diameter is assumed to be 50 mm and the flow rate is assumed to be 60 litters/min., a=0.002 $m^2$, Q=0.001 $m^3$/sec, and the water depth h in the header 2 = 0.001×0.001/(0.002×0.002×2×9.8) =0.0128 m=12.8 mm.

a) The header 2 has a diameter of 150 mm.

The center of the branch pipe is 0.075 m away from the bottom surface thereof.

The total water depth is 0.0878.

In this case, A=0.0101 $m^2$ and V=Q/A=0.10 m/s.

Thus, to allow the cleaning chemical liquid to flow uniformly through the 10 branch pipes 3, it is necessary to set the inflow velocity to 10V=1.0 m/s (from a height of 0.05 m in a free fall).

In a free fall from a height of 1 m, the cleaning chemical liquid flows in at a flow velocity of 4.4 m/s. Thus, for example, when the cleaning chemical liquid is allowed to flow through piping of diameter 100 mm at the same flow rate, A=10Q/4.4=0.01/4.4=0.00227

In this case, the total water depth is 0.0325<0.075. Thus, the water level is lower than the center (0.075) of the branch pipe, preventing the cleaning chemical liquid from flowing out of the first branch pipe.

As a result, the water level increases sequentially from the terminal of the header, increasing the flow rate in the corresponding branch pipes above the design value. Furthermore, to bring the whole header into the full condition, it is necessary that v=sqrt(2gh)-1m and Q=10axsqrt(2gh) =10x0.002x1=0.2 $m^3$/sec=120 ml/min. That is, the flow rate needs to be doubled, preventing the header from becoming full. Therefore, the water level increases sequentially from the terminal of the header to increase the flow rate in the corresponding branch pipes, while reducing the flow rate in several branch pipes located closer to the start point.

**Claims**

1. A large scale membrane separating installation comprising a plurality of membrane units arranged in a reaction vessel and a plurality of branch pipes branching from a header and connected to collecting headers of the respective membrane units so that a cleaning chemical liquid flows through the header and the branch pipes to the respective membrane units, wherein a cleaning chemical liquid distribution unit comprises the header and the branch pipes each having a smaller diameter than the header, and the cleaning chemical liquid distribution unit comprises a pipeline configuration uniformly distributing the cleaning chemical liquid to be supplied to the membrane units.

2. The large scale membrane separating installation according to claim 1, wherein the cleaning chemical liquid distribution unit adjusts a first force resulting mainly from a pressure head and a second force resulting mainly from a velocity head, and wherein the first force acts as a force that pushes the cleaning chemical liquid in the header toward an inlet of each of the branch pipes, and the second force acts as a force that sweeps away the cleaning chemical liquid in the header in a pipe axis direction.

3. The large scale membrane separating installation according to claim 1, wherein the cleaning chemical liquid distribution unit is configured such that the header is located along a direction in which the membrane units are arranged and along a horizontal direction, mounting axes of the branch pipes are arranged parallel to one another, the header is positioned above a liquid level in the reaction vessel, and each of the branch pipes is inclined with a falling gradient from the header toward the collecting header at a predetermined angle.

4. The large scale membrane separating installation according to claim 1, wherein the cleaning chemical liquid distribution unit is configured such that the header is located along a direction in which the membrane units are arranged and along a horizontal direction, mounting axes of the branch pipes are arranged parallel to one another, the header is positioned above a liquid level in the reaction vessel, and each of the branch pipes has an overflow portion at a predetermined height position above the header.

5. The large scale membrane separating installation according to claim 4, wherein an air open portion is provided in the overflow portion of each branch pipe.

6. The large scale membrane separating installation according to claim 1, wherein the cleaning chemical liquid distribution unit is configured such that the header is located along a direction in which the membrane units are arranged and along a horizontal direction, mounting axes of the branch pipes are arranged parallel to one another, the header is positioned below a liquid level in the reaction vessel, and each of the branch pipes is connected to the header below the liquid level.

7. The large scale membrane separating installation according to claim 1, wherein the cleaning chemical liquid distribution unit is configured such that the header is located along a direction in which the membrane units are arranged and along a horizontal direction, mounting axes of the branch pipes are arranged parallel to one another, the header is positioned at or above a liquid level, and the header is divided into a plurality of short pipelines each of which is located for every predetermined number of membrane units and each of which is in communication with a cleaning chemical liquid supply source at a central part thereof in a pipe axis direction.

8. The large scale membrane separating installation according to claim 1, wherein the cleaning chemical liquid distribution unit is configured such that the header is located at an equal distance in a vertical direction from the plurality of membrane units circularly arranged in the reaction vessel, the branch pipes branching from the header are radially arranged, and the header is positioned at or above a liquid level.

9. The large scale membrane separating installation according to claim 1, wherein the cleaning chemical liquid distribution unit is configured such that the header is located along a direction in which the membrane units are arranged and along a horizontal direction, mounting axes of the branch pipes are arranged parallel to one another, the header is in communication with a cleaning chemical liquid supply source at an inlet of the header at one end thereof in a pipe axis direction, and the header has a pressure control device provided at the other end thereof in the pipe axis direction to maintain a pressure at less than or equal to a set value.

10. The large scale membrane separating installation according to claim 9, wherein the pressure control device comprises a pressure sensing device, a valve device that is in communication with the header, and a control device that opens the valve device when a pressure detected by the pressure sensing device reaches an upper limit value.

11. The large scale membrane separating installation according to claim 1, wherein the cleaning chemical liquid distribution unit is configured such that the header is located along a direction in which the membrane units are arranged and along a horizontal direction, the header is in communication with a cleaning chemical liquid supply source at an inlet thereof at one end thereof in a pipe axis direction and with a return pipe at an outlet thereof at the other end thereof in the pipe axis direction, and the return pipe is in communication with the inlet of the header or the cleaning chemical liquid supply source,

FIG. 1

FIG. 2

FIG. 3

| | a | b | c |
|---|---|---|---|
| DIAGRAM VIEWED IN DIRECTION OF ARROW a-a | LOCATED IMMEDIATELY BELOW HEADER | LOCATED IMMEDIATELY LATERALLY TO HEADER | OBLIQUELY LOCATED AT 45° TO HEADER |
| VARIATION IN CHEMICAL LIQUID | MORE CHEMICAL LIQUID ON UPSTREAM SIDE | MORE CHEMICAL LIQUID ON DOWNSTREAM SIDE | ALMOST UNIFORM |

FIG. 4A

KNOWN, BRANCH PIPE, HORIZONTAL DIRECTION

FIG. 4B

KNOWN, BRANCH PIPE, DOWNWARD IN VERTICAL DIRECTION

FIG. 4C

EFFECTS OF EMBODIMENT, BRANCH PIPE: 45°

EP 1 952 879 A1

FIG. 5

FIG. 6

INJECTION OF
CHEMICAL LIQUID

17

FIG. 7A

21a
21b
21
h3
3
2
h1

FIG. 7B

21a
21b
21
3
2
h3

FIG. 8

FIG. 9

FIG. 10

FIG. 11

FIG. 12

## FIG. 13

CONTROL DEVICE

DISCHARGE OF EXCESS CHEMICAL LIQUID

FIG. 14

INJECTION OF CHEMICAL LIQUID

FIG. 15

FIG. 16

INJECTION OF
CHEMICAL LIQUID

FIG. 17

FLOW RATE (n-1) Q
FLOW VELOCITY (n-1) V

FLOW RATE nQ
FLOW VELOCITY nV

FLOW RATE (n+1) Q
FLOW VELOCITY (n+1) V

WATER LEVEL h
CROSS SECTION A

FLOW RATE Q
FLOW VELOCITY v
CROSS SECTION a

FLOW RATE Q
FLOW VELOCITY v
CROSS SECTION a

FLOW RATE Q
FLOW VELOCITY v
CROSS SECTION a

FIG. 18A

PRIOR ART

FIG. 18B

FIG. 18C

PRIOR ART

FIG. 19

PRIOR ART

<table>
<tr><td colspan="2" align="center">**INTERNATIONAL SEARCH REPORT**</td><td>International application No.<br>PCT/JP2005/019479</td></tr>
</table>

| | |
|---|---|
| A. CLASSIFICATION OF SUBJECT MATTER<br>*B01D65/02*(2006.01), *B01D63/00*(2006.01) | |

According to International Patent Classification (IPC) or to both national classification and IPC

| B.   FIELDS SEARCHED |
|---|

Minimum documentation searched (classification system followed by classification symbols)
*B01D65/02*(2006.01), *B01D63/00*(2006.01)

Documentation searched other than minimum documentation to the extent that such documents are included in the fields searched

| Jitsuyo Shinan Koho | 1922-1996 | Jitsuyo Shinan Toroku Koho | 1996-2005 |
|---|---|---|---|
| Kokai Jitsuyo Shinan Koho | 1971-2005 | Toroku Jitsuyo Shinan Koho | 1994-2005 |

Electronic data base consulted during the international search (name of data base and, where practicable, search terms used)
WPI

| C.   DOCUMENTS CONSIDERED TO BE RELEVANT |
|---|

| Category* | Citation of document, with indication, where appropriate, of the relevant passages | Relevant to claim No. |
|---|---|---|
| X<br>A | JP 9-052026 A  (Kubota Corp.),<br>25 February, 1997 (25.02.97),<br>Claims; Par. Nos. [0016], [0032] to [0034];<br>Fig. 2<br>(Family: none) | 1,2,6<br>3-5,7-11 |
| X<br>A | JP 4-131182 A  (Ebara Infiruko Kabushiki Kaisha),<br>01 May, 1992 (01.05.92),<br>Claims; Fig. 1<br>(Family: none) | 1,7<br>2-6,8-11 |

|   | Further documents are listed in the continuation of Box C. | |   | See patent family annex. |
|---|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>12 December, 2005 (12.12.05) | Date of mailing of the international search report<br>20 December, 2005 (20.12.05) |
|---|---|
| Name and mailing address of the ISA/<br>Japanese Patent Office | Authorized officer |
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9052026 A